# EUROPÄISCHE PATENTSCHRIFT

(11) **EP 3 025 821 B1**
(45) Veröffentlichungstag und Bekanntmachung des Hinweises auf die Patenterteilung: **19.06.2019**
(21) Anmeldenummer: 15192236.6
(22) Anmeldetag: 30.10.2015
(51) Int. Cl.: B23K 11/00, B23K 11/11, B23K 11/20, B32B 15/01, C22C 14/00, C22C 21/00, B23K 101/18, B23K 103/08, B23K 103/10, B23K 103/14, B23K 103/18, B23K 35/30, B23K 1/00, B23K 35/02, C22C 19/05, C22C 19/07, F01D 5/22

(54) **LÖTVERFAHREN ZUR PANZERUNG DER Z-NOTCH VON TIAL-SCHAUFELN**
SOLDERING METHOD FOR ARMOURING THE Z NOTCH OF TIAL BLADES
PROCEDE DE SOUDAGE POUR BLINDAGE DE L'ENCOCHE EN FORME DE Z D'AUBES EN TIAL

(30) Priorität: 26.11.2014 DE 102014224156
(43) Veröffentlichungstag der Anmeldung: 01.06.2016
(73) Patentinhaber: MTU Aero Engines AG, 80995 München (DE)
(72) Erfinder: Richter, Karl-Hermann, 85229 Markt Indersdorf (DE); Hanrieder, Herbert, 85411 Hohenkammer (DE)

(56) Entgegenhaltungen:
- EP-A1- 0 999 009
- WO-A1-2011/009430
- DE-A1-102011 086 524
- DE-A1-102011 087 158
- US-A- 5 890 274

## Beschreibung

Die Arbeiten, die zu dieser Erfindung geführt haben, wurden gemäß der *Finanzhilfevereinbarung* Nr. CSJU-GAM-SAGE-2008-001 im Zuge des Siebten Rahmenprogramms der Europäischen Union (*FP7*/*2007-2013*) für Clean Sky Joint Technology Initiative gefördert.

### HINTERGRUND DER ERFINUNG

### GEBIET DER ERFINDUNG

Die vorliegende Erfindung betrifft ein Verfahren zur Anordnung einer Panzerung, auf einem TiAl - Bauteil einer Strömungsmaschine, insbesondere einem TiAl - Triebwerksteil, sowie ein entsprechendes, mit der Panzerung versehenes Bauteil, z.B. ein Triebwerksbauteil, insbesondere eine Laufschaufel einer Niederdruckturbine.

### STAND DER TECHNIK

Turbinenschaufeln für Niederdruckturbinen von Flugtriebwerken können Deckbänder aufweisen, die benachbart zueinander gegenseitig aneinander anliegen. Die benachbarten Seitenflächen werden üblicherweise Z-förmig ausgebildet und weisen Kontaktbereiche auf, in denen die Deckbänder direkt aneinander anstoßen, um zur Schwingungsdämpfung beizutragen. Diese Kontaktflächen der Deckbänder sind üblicherweise mit einer Panzerung versehen, um den mechanischen Abrieb gering zu halten.

Nach dem Stand der Technik werden hierfür Co-Cr-Legierungen, insbesondere sogenannte Stellite (eingetragene Marke der Firma Deloro Stellite), verwendet, die beispielsweise durch WIG-, Mikroplasma- oder Laserstrahlschweißen oder durch sonstige Auftragsschweißverfahren aufgebracht werden. Während für Nickelbasislegierungen bzw. Superlegierungen diese Art der Panzerung gut geeignet ist, ist dies bei Turbinenschaufeln aus Titanaluminiden (TiAl - Legierungen) problematisch, da durch die Durchmischung von TiAl mit Stelliten spröde Phasen entstehen, die zur Rissbildung führen können.

Aus diesem Grunde wurden bei TiAl - Schaufeln für Niederdruckturbinen plasmagespritzte Schichten aus der Co-Cr-Legierung T-800 (eingetragene Marke der Firma Deloro Stellite) eingesetzt. Allerdings erfüllen diese Beschichtungen bzw. Panzerungen unter Umständen nicht die Anforderungen an die Haftungseigenschaften.

Entsprechend wurde weiterhin vorgeschlagen (WO 2011/009430) zur Panzerung der Kontaktflächen von Deckbändern von TiAl-Niederdruckturbinenschaufeln (den sogenannten Z-Notches) Formteile aus Stelliten durch Löten aufzubringen. Obwohl damit bereits gute Ergebnisse erzielbar sind, besteht noch weiterer Bedarf eine Verbesserung der Bindung der Panzerung an das TiAl - Bauteil und ein optimiertes Herstellverfahren der Panzerung bereitzustellen. Der Vollständigkeit halber sei zudem auch auf die DE 10 2011 087158 A1 verwiesen.

### OFFENBARUNG DER ERFINDUNG

### AUFGABE DER ERFINDUNG

Es ist deshalb Aufgabe der Erfindung, die Nachteile des Standes der Technik zu vermeiden und eine Panzerung auf einem TiAl - Bauteil, insbesondere einer TiAl - Niederdruckturbinenschaufel, zu ermöglichen, wobei die Beschichtung einfach durchführbar sein soll und zuverlässige Ergebnisse hinsichtlich einer gut haftenden Panzerung liefern soll.

### TECHNISCHE LÖSUNG

Diese Aufgabe wird gelöst durch ein Verfahren mit den Merkmalen des Anspruchs 1 und einem Bauteil mit den Merkmalen des Anspruchs 12. Vorteilhafte Ausgestaltungen sind Gegenstand der abhängigen Ansprüche.

Zur Lösung der oben genannten Aufgabe wird vorgeschlagen, die Panzerung an einem TiAl - Bauteil mit einem Panzer - Formteil auszubilden, welches mittels Löten auf dem TiAl - Bauteil aufgebracht wird, wobei als Lot eine Nickelbasislegierung mit der chemischen Zusammensetzung verwendet wird, die aus 7,5 bis 22,5 Gew.-% Cr, 0,5 bis 7 Gew.-% B und als Rest Nickel sowie unvermeidbare Verunreinigungen besteht. Eine derartige Lotzusammensetzung hat sich als vorteilhaft für eine stabile und zuverlässige Lotverbindung herausgestellt.

Insbesondere kann die Nickelbasislegierung, die als Lot verwendet wird, eine chemische Zusammensetzung mit 10 bis 20 Gew.-%, vorzugsweise 12,5 bis 17,5 Gew.-% und höchst vorzugsweise 15 Gew.-% Cr sowie 2 bis 5 Gew.-%, insbesondere 3 bis 4 Gew.-% und höchst vorzugsweise 3,5 Gew.-% B, sowie Rest Ni und unvermeidbare Verunreinigungen aufweisen.

Das Panzer - Formteil kann aus einem metallischen Werkstoff gebildet sein, wobei insbesondere Hartstoff - Legierungen zum Einsatz kommen können. Als Werkstoff für die Panzerung kommen Co - Cr - Legierungen, insbesondere Co - Basis - Legierungen mit einem Chromanteil von über 25 Gew.% und W - Anteilen von 4 bis 20 Gew.% in Frage. Beispiele hierfür sind insbesondere die Stellite - Legierungen der Firma Deloro Stellite.

Das Lot kann als Lotfolie angeordnet werden, wobei insbesondere ein Anheften der Lotfolie an das Panzer - Formteil vor dem Anbringen des Panzer - Formteils auf dem TiAl - Bauteil realisiert werden kann. Das Anheften der Lotfolie an das Panzer-Formteil kann durch Punktschweißen, Widerstandsschweißen und/oder Kleben realisiert werden.

Das Panzer - Formteil kann eine besondere Form aufweisen, die das vollflächige und sichere Löten des Panzer - Formteils an das TiAl - Bauteil ermöglicht. Insbesondere kann das Panzer - Formteil einen konvex gekrümmten Oberflächenbereich aufweisen, wobei der konvex gekrümmte Oberflächenbereich in einen konkav gekrümmten Oberflächenbereich einer Tasche des TiAl - Bauteils eingesetzt werden kann, um durch die komplementäre Ausbildung von konvexem Oberflächenteil des Panzer - Formteils und konkaver Oberfläche der aufnehmenden Tasche des TiAl - Bauteils eine besonders stabile und sichere Anbindung des Formteils am TiAl - Bauteil über eine Lotschicht zu realisieren.

Vor dem Verlöten bzw. Anbringen des Panzer - Formteils an dem TiAl - Bauteil können sowohl TiAl - Bauteil im Bereich des Aufbringungsortes als auch das Panzer - Formteil oberflächenbehandelt werden, und zwar insbesondere durch Strahlen mit Partikeln, vorzugsweise SiC - Partikeln, sodass eine Reinigung und Verdichtung der Oberflächen erfolgt. Statt beide zu verbindenden Oberflächen, nämlich die Oberfläche des Panzer - Formteils und die Oberfläche des TiAl - Bauteils entsprechend zu behandeln, kann auch eine Oberflächenbehandlung nur einer der Oberflächen erfolgen.

Zur Sicherstellung einer guten Lot - Verbindung kann das Panzer - Formteil während des Lötens fixiert werden, insbesondere mit einem Stab, der das Panzer - Formteil an dem TiAl - Bauteil festhält. Bei dem Stab kann es sich um einen Keramik - Stab, einen Glas - Stab oder einen Graphit - Stab handeln, wobei insbesondere ein Graphit - Stab vorteilhaft ist, da durch die gute Wärmeleitfähigkeit des Graphits eine gleichmäßige Temperatureinstellung über dem Panzer - Formteil während des Lötens möglich ist.

Der Lötprozess an sich kann mittels eines Pyrometers und einer Wärmebildkamera überwacht werden, sodass mit dem Überwachungsergebnis eine gezielte Steuerung und/oder Regelung des Lötprozesses möglich ist. Bei Verwendung einer induktiven Heizung für das Löten kann mithilfe der Überwachungsergebnisse von Pyrometer und/oder Wärmebildkamera eine geeignete Temperatursteuerung und/oder - regelung realisiert werden.

Das Löten kann bei einer Löttemperatur von 1050°C bis 1130°C, vorzugsweise bei 1090°C durchgeführt werden, wobei die Haltezeit auf der Löttemperatur im Bereich von 10 s bis 300 s liegen kann.

Unter einem TiAl-Bauteil wird bei der vorliegenden Erfindung ein Bauteil verstanden, welches aus einem TiAI-Werkstoff gebildet ist, das heißt einem Werkstoff, bei dem als größte Bestandteile eine Legierungszusammensetzung Ti und Al enthalten sind. Insbesondere handelt es sich um TiAl-Legierungen, die intermetallischen Phasen in Form von Titanaluminiden, wie Gamma-TiAl oder α2Ti3Al ausbilden.

### KURZBESCHREIBUNG DER FIGUREN

Die beigefügten Figuren zeigen in rein schematischer Darstellung in
- Fig. 1: eine Draufsicht auf ein Deckband einer Laufschaufel eines Flugtriebwerks,
- Fig. 2: eine perspektivische Darstellung eines Panzer - Formteils mit angehefteter Lotfolie,
- Fig. 3: in den Teilbildern a) und b) einen Längsschnitt (a) und eine Draufsicht (b) auf das Panzer - Formteil aus Fig. 2 und in
- Fig. 4: eine Seitenansicht einer Anordnung beim Verlöten des Panzer - Formteils mit dem TiAl - Bauteil.

### AUSFÜHRUNGSBEISPIEL

Weitere Vorteile, Kennzeichen und Merkmale der vorliegenden Erfindung werden bei der nachfolgenden detaillierten Beschreibung eines Ausführungsbeispiels deutlich. Die Erfindung ist jedoch nicht auf dieses Ausführungsbeispiel beschränkt.

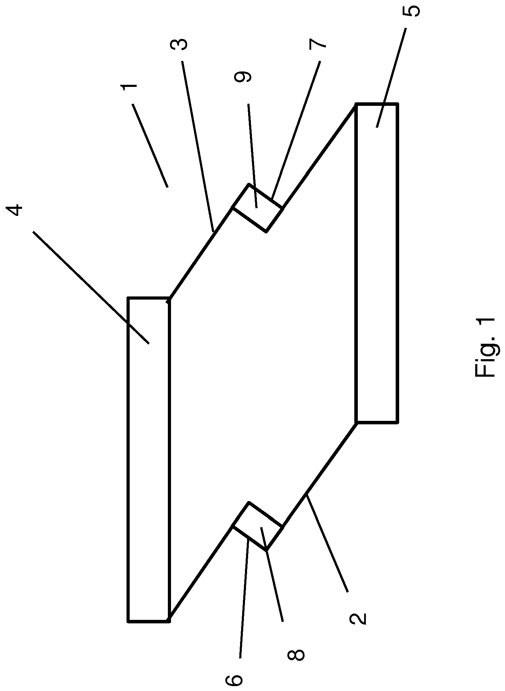

Die Fig. 1 zeigt eine Draufsicht auf ein Deckband 1 einer Laufschaufel, wie sie beispielsweise in einer Niederdruckturbine eines Flugtriebwerks eingesetzt werden kann. Die Laufschaufel und das Deckband 1 bestehen aus einer hochfesten und hochtemperaturbeständigen Titanaluminid - Legierung, also einer Legierung, die im Wesentlichen aus intermetallischen Phasen, wie α₂ - Ti₃Al oder γ - TiAl, gebildet ist und im Allgemeinen hier als TiAl - Legierung bezeichnet wird. Das Deckband 1 hat eine im Wesentlichen plattenartige Gestalt mit zwei voneinander beabstandeten, sich in Rotationsrichtung erstreckenden, außen liegenden Dichtlippen bzw. Dichtstegen 4, 5 und zwei Z - förmigen Seitenflächen 2 und 3, die an benachbarten Laufschaufeln bzw. Deckbändern anliegen. Die Z-förmigen Seitenflächen 2, 3 weisen jeweils eine Kontaktfläche 6, 7 zur gegenseitigen Anlage mit benachbarten Laufschaufeln bzw. Deckbändern zur Schwingungsdämpfung auf. Zur Reduzierung des Abriebs an den Kontaktflächen 6, 7 sind diese jeweils mit einer Panzerung 8, 9 versehen.

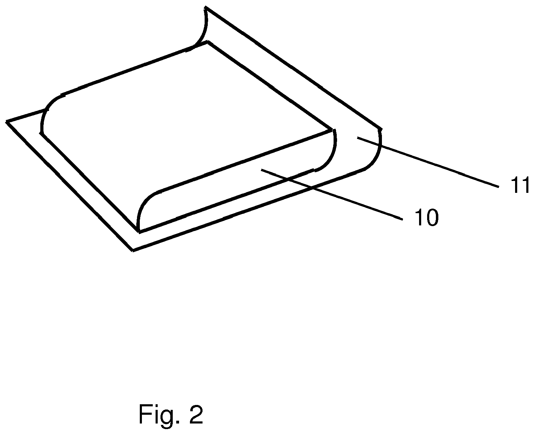

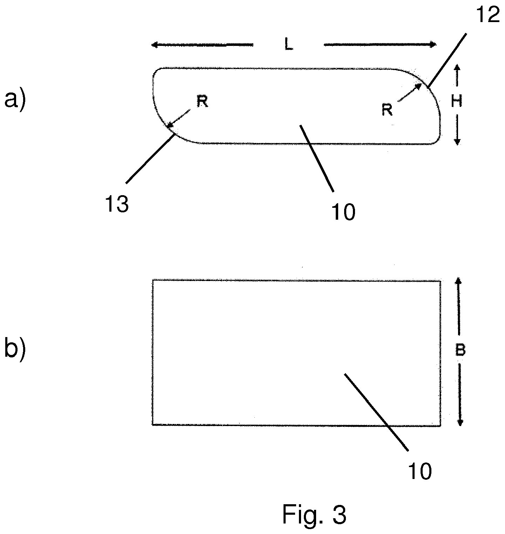

Die Panzerungen 8, 9, die an den Kontaktflächen 6, 7 des Deckbands 1 vorgesehen sind, sind aus Panzer - Formteilen 10 gebildet (siehe Fig. 2 und3), die an dem Deckband 1 aufgelötet sind. Wie in der Figur 2 gezeigt ist, wird zum Löten eine Lotfolie 11 verwendet, die an dem Panzer - Formteil 10 angeheftet ist. Das Anheften der Lotfolie kann durch Punktschweißen und insbesondere Widerstandspunktschweißen oder Kleben erfolgen. Der Kleber, mit dem die Lotfolie 11 an dem Panzer - Formteil 10 angeheftet sein kann, sollte so gewählt werden, dass der Kleber bereits bei einer Temperatur unterhalb der Löttemperatur im Vakuum schnell verdampft, sodass der Kleber keine negativen Auswirkungen auf die Herstellung der Lötschicht aufweist und nicht in die Lötschicht eingebaut wird.

Die Dicke der Lotfolie 11 kann im Bereich von 25 µm bis 100 µm, vorzugsweise 50 µm gewählt werden.

Die Lotfolie kann, wie in Figur 2 gezeigt, mit Überstand zum Panzer - Formteil 10 ausgebildet sein, und zwar mit einem Überstand von 0,1 mm bis 1 mm bezüglich der Breite B des Panzer - Formteils 10 (siehe Figur 3b) oder mit einem Überstand von 0,1 mm bis 2 mm in Längsrichtung L (siehe Figur 3a). Durch den Überstand der Lotfolie 11 ist sichergestellt, dass eine vollständige Benetzung des Panzer - Formteils 10 und der Auflagefläche am Deckband 1 erfolgt, sodass eine vollflächige Lötschicht ausgebildet werden kann.

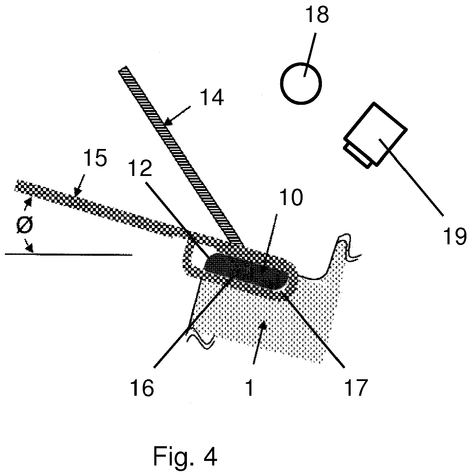

Das Panzer - Formteil 10 weist im Wesentlichen die Grundform eines Parallelepipeds, insbesondere eines Quaders auf, wobei zwei, in Breitenrichtung verlaufende und diagonal gegenüberliegend angeordnete Kanten in abgerundet sind und konvex gewölbte Oberflächenbereiche 12, 13 bilden. Mit einer derartigen Form lassen sich die Panzer - Formteile besonders gut in Taschen 16 platzieren, die im Bereich der sogenannten Z - Notch (Z - Nut) ausgebildet werden können, wie in Figur 4 gezeigt ist. Die Taschen 16 können eine zumindest teilweise komplementäre Form zu Form der Panzer - Formteile 10 aufweisen, insbesondere eine konkave Wölbung 17, die der konvexen Wölbung 12, 13 des Panzer - Formteils 10 an der abgerundeten Kante entspricht, sodass das Panzer - Formteil mit einer kontinuierlich verlaufenden Fläche an dem Deckband 1 angeordnet ist.

Die der konvexen Wölbung, die in der konkaven Wölbung des Deckbands 1 aufgenommen ist, gegenüberliegende konvexe Wölbung 12 des Panzer - Formteils 10 ermöglicht einerseits eine bessere Anlage an das Deckband der benachbarten Laufschaufel und andererseits die universelle Verwendung eines entsprechenden Panzer - Formteils 10 sowohl auf der einen als auch auf der anderen Seite entsprechender Z - Nuten des Deckbands 1.

Wie in Figur 3 mit den Teilbildern a) und b) gezeigt ist, sind die Panzer - Formteile 10 über eine entsprechende Länge L, eine Höhe H und eine Breite B definiert, die an die entsprechenden Abmessungen der zugehörigen Taschen 16 im Deckband 1 der TiAl - Laufschaufeln angepasst sind.

Die entsprechend geformten Taschen 16 des Deckbands 1 sowie die Panzer - Formteile 10 können vor dem Löten, insbesondere vor dem Anheften der Lotfolie 11 an das Panzer - Formteil 10, wie in Figur 2 gezeigt, oberflächenbehandelt werden, sodass eine Reinigung und Vorbereitung der jeweiligen Oberfläche für den nachfolgenden Löteprozess gegeben ist. Eine geeignete Oberflächenvorbehandlung besteht z.B. darin, die Oberflächen mit Partikeln, beispielsweise SiC - Partikeln zu strahlen, um entsprechende Verunreinigung zu entfernen und/oder die Oberfläche zu verdichten.

Nach dem Anbringen der Lotfolie 11 an das Panzer - Formteil 10 und dem Anordnen des so vorbereiteten Panzer - Formteils 10 in einer Tasche 16 des Deckbands 1 wird das Panzer - Formteil 10 mittels eines Stabs 14 fixiert, sodass während des Lötprozesses eine definierte Position des Panzer-Formteils gewährleistet werden kann und eine vollflächige Anbindung des Panzer - Formteils 10 an das Deckband 1 sichergestellt werden kann.

Der Stab 14 kann aus Glas, Keramik oder Graphit bestehen und insbesondere aus isostatisch gepresstem Graphit gebildet sein. Graphit bzw. isostatisch gepresster Graphit (Iso-Graphit) ist deshalb bevorzugt, weil dieses Material eine hohe Wärmeleitfähigkeit aufweist, sodass über den Stab 14 während des Lötprozesses Wärme abgeleitet werden kann und damit eine gleichmäßige Temperaturverteilung über dem TiAl - Grundwerkstoff des Deckbands 1 und dem Panzer - Formteil 10 erreicht werden kann.

Neben der Fixierung mit dem Stab 14 wird eine zuverlässige Fixierung des Panzer - Formteils 10 in der Tasche 16 dadurch gewährleistet, dass das TiAl - Bauteil während des Lötprozesses so geneigt angeordnet wird, dass das Panzer - Formteil 10 und insbesondere die konvexe Oberfläche davon durch die Schwerkraft in die Tasche 16 und die konkave Ausbuchtung 17 gedrückt wird. Der Neigungswinkel θ kann beispielsweise im Bereich von 5° bis 30° gegenüber der Horizontalen gewählt sein.

Die Lötung erfolgt mittels der Lotfolie 11 und einer induktiven Erwärmung der Lotfolie 11 bzw. des Lots, wie dies in Figur 4 durch die Spule 15 verdeutlicht ist. Der Lötprozess erfolgt in einer Vakuum - Kammer (nicht gezeigt) oder unter einer entsprechenden Schutzgasatmosphäre. Die Löttemperatur beträgt zwischen 1050°C und 1130°C, vorzugsweise um 1090°C. Die Lötzeit bzw. die Haltezeit der Löttemperatur liegt zwischen 10 Sekunden und 300 Sekunden, vorzugsweise im Bereich von 30 Sekunden. Die Abkühlung auf eine Temperatur im Bereich von 700°C bis 900°C erfolgt mit einer Abkühlgeschwindigkeit im Bereich von 5 K/min bis 100 K/min.

Zur Überwachung der Löttemperatur und der Abkühlgeschwindigkeit ist, wie in Figur 4 dargestellt, ein Pyrometer 18 vorgesehen, welches über eine nicht dargestellte Steuer- und/oder Regelungseinrichtung den Betrieb der Induktionsspule 15 beeinflusst, sodass die Löttemperatur und die Abkühlgeschwindigkeiten in den gewünschten Bereichen liegen. Zusätzlich kann mit einer Wärmebildkamera 19 das Aufschmelzen der Lotfolie 11 überwacht werden, um durch einen kontrollierten und definierten Lötprozess eine sichere und stabile Verbindung des Panzer - Formteils 10 und des Deckbands 1 zu gewährleisten.

Eine Nachbearbeitung des Deckbands 1 mit dem Panzer - Formteil 10 ist so üblicherweise nicht mehr nötig.

Wie sich unmittelbar ergibt, kann das vorgestellte Verfahren nicht nur zur Herstellung einer Panzerung einer Z - Notch an Deckbändern von TiAl - Laufschaufeln eingesetzt werden, welches vorher detailliert beschrieben worden ist, sondern auch zur Reparaturen derartiger Bauteile. Darüber hinaus kann das erfindungsgemäße Verfahren natürlich auch mit anderen Bauteilen bzw. zur Herstellung und Reparatur von anderen Panzerungen und/oder an anderen Bauteilen eingesetzt werden.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen oder andersartige Kombinationen der vorgestellten Merkmale vorgenommen werden, ohne dass der Schutzbereich der beigefügten Ansprüche verlassen wird. Die vorliegende Erfindung umfasst insbesondere sämtliche Kombinationen aller vorgestellten Einzelmerkmale.

### BEZUGSZEICHENLISTE

- 1: Deckband
- 2, 3: Seitenflächen
- 4, 5: Dichtlippen
- 6, 7: Kontaktflächen
- 8, 9: Panzerungen
- 10: Panzer - Formteil
- 11: Lotfolie
- 12, 13: konvexe Oberflächen
- 14: Stab
- 15: Induktionsfläche
- 16: Tasche
- 17: konkave Oberflächenbereich
- 18: Pyrometer
- 19: Wärmebildkamera

## Patentansprüche

1. Verfahren zur Anordnung einer Panzerung (8,9) auf einem TiAl - Bauteil (1) einer Strömungsmaschine, wobei die Panzerung durch ein Panzer - Formteil (10) gebildet wird, welches mittels Löten auf dem TiAl - Bauteil (1) aufgebracht wird,
**dadurch gekennzeichnet, dass**
als Lot eine Nickelbasislegierung verwendet wird, welche die chemische Zusammensetzung 7,5 bis 22,5 Gew.% Cr, 0,5 bis 7 Gew.% B und Rest Ni sowie unvermeidbare Verunreinigungen aufweist.

2. Verfahren nach Anspruch 1,
**dadurch gekennzeichnet, dass**
das Lot aus einer Nickelbasislegierung mit der chemischen Zusammensetzung 10 bis 20 Gew.% Cr, insbesondere 12,5 bis 17,5 Gew.% Cr, vorzugsweise 15 Gew.% Cr, 2 bis 5 Gew.% B, insbesondere 3 bis 4 Gew.% B, vorzugsweise 3,5 Gew.% B und Rest Ni gebildet wird.

3. Verfahren nach Anspruch 1 oder 2,
**dadurch gekennzeichnet, dass**
das Panzer - Formteil (10) aus einem metallischen Werkstoff gebildet ist.

4. Verfahren nach einem der vorhergehenden Ansprüche,
**dadurch gekennzeichnet, dass**
das Panzer - Formteil (10) aus einer Co - Cr - Legierungen, insbesondere Co - Basis - Legierungen mit einem Cr - Anteil von über 25 Gew.% gebildet wird.

5. Verfahren nach Anspruch 4,
**dadurch gekennzeichnet, dass**
die Co-Cr-Legierung eine Co-Basis-Legierungen mit Cr-Anteilen von über 25 Gew.% ist, die Wolfram mit einem Anteil von 4 bis 20 Gew.%, Kohlenstoff mit einem Anteil von 1 bis 3 Gew.%, Silizium mit einem Anteil von 0 bis 1,5 Gew.%, Eisen mit einem Anteil von 0 bis 3 Gew.% und Nickel mit einem Anteil von 0 bis 3 Gew. % aufweist.

6. Verfahren nach einem der vorhergehenden Ansprüche,
**dadurch gekennzeichnet, dass**
das Lot als Lotfolie (11), insbesondere mit Übermaß, an dem Panzer - Formteil (10) angebracht wird, vorzugsweise durch Punktschweißen und/oder Widerstandsschweißen und/oder Kleben.

7. Verfahren nach einem der vorhergehenden Ansprüche,
**dadurch gekennzeichnet, dass**
das Panzer - Formteil (10) als Parallelepiped mit zwei diagonal gegenüberliegenden Kanten, die abgerundet sind, ausgebildet ist, sodass eine Oberfläche eine konvexe Krümmung mit einem Krümmungsradius aufweist, wobei das Panzer - Formteil (10) im Längsschnitt als Parallelogramm ausgebildet ist, bei dem die gegenüberliegenden Ecken abgerundet sind, und im Querschnitt ein Rechteck bildet.

8. Verfahren nach einem der vorhergehenden Ansprüche,
**dadurch gekennzeichnet, dass**
das TiAl - Bauteil (1) mit einer Tasche (16) versehen wird, welche zum mindestens teilweise komplementär zum Panzer - Formteil (10) ist.

9. Verfahren nach Anspruch 8,
**dadurch gekennzeichnet, dass**
das TiAl - Bauteil (1) zumindest im Bereich der Tasche und/oder das Panzer - Formteil vor dem Aufbringen des Panzer - Formteils in der Tasche oberflächenbehandelt werden, insbesondere mit Partikeln, vorzugsweise SiC - Partikel gestrahlt werden.

10. Verfahren nach einem der vorhergehenden Ansprüche,
**dadurch gekennzeichnet, dass**
das Panzer - Formteil (10) mit einem Stab (14), insbesondere einem Keramik - Stab oder Graphit - Stab oder Glas - Stab während dem Löten gehalten wird.

11. Verfahren nach einem der vorhergehenden Ansprüche,
**dadurch gekennzeichnet, dass**
der Lötprozess mittels eines Pyrometers(18) und/oder einer Wärmebildkamera (19) überwacht und/oder gesteuert und/oder geregelt wird.

12. Bauteil einer Strömungsmaschine mit einer Panzerung (8,9), die nach einem der vorhergehenden Ansprüche hergestellt ist.

## Claims

1. Method for arranging an armoring (8, 9) on a TiAl component (1) of a turbomachine, the armoring being formed by an armor molded part (10) which is applied to the TiAl component (1) by brazing, **characterized in that** the brazing used is a nickel-based alloy which has the chemical composition 7.5 to 22.5 wt.% Cr, 0.5 to 7 wt.% B and the remainder Ni and unavoidable impurities.

2. Method according to claim 1, **characterized in that** the brazing metal is formed from a nickel-based alloy having the chemical composition 10 to 20 wt.% Cr, in particular 12.5 to 17.5 wt.% Cr, preferably 15 wt.% Cr, 2 to 5 wt.% B, in particular 3 to 4 wt.% B, preferably 3.5 wt.% B, and the remainder Ni.

3. Method according to either claim 1 or claim 2, **characterized in that** the armor molded part (10) is formed from a metal material.

4. Method according to any of the preceding claims, **characterized in that** the armor molded part (10) is formed from a Co-Cr alloy, in particular a Co-based alloy having a Cr proportion of more than 25 wt.%.

5. Method according to claim 4, **characterized in that** the Co-Cr alloy is a Co-based alloy having Cr proportions of more than 25 wt.%, comprising tungsten in a proportion of from 4 to 20 wt.%, carbon in a proportion of from 1 to 3 wt.%, silicon in a proportion of from 0 to 1.5 wt.%, iron in a proportion of from 0 to 3 wt.%, and nickel in a proportion of from 0 to 3 wt.%.

6. Method according to any of the preceding claims, **characterized in that** the brazing metal is applied as brazing foil (11), in particular oversized brazing foil, to the armor molded part (10), preferably by spot welding and/or resistance welding and/or adhesive bonding.

7. Method according to any of the preceding claims, **characterized in that** the armor molded part (10) is designed as a parallelepiped that has two diagonally opposite edges which are rounded, so that one surface has a convex curvature having a radius of curvature, the armor molded part (10) being designed, in the longitudinal section, as a parallelogram, in which the opposite corners are rounded, and forming a rectangle in cross section.

8. Method according to any of the preceding claims, **characterized in that** the TiAl component (1) is provided with a recess (16) which is at least partially complementary to the armor molded part (10).

9. Method according to claim 8, **characterized in that** the TiAl component (1), at least in the region of the recess, and/or the armor molded part, before the armor molded part is mounted in the recess, are surface-treated, in particular blasted with particles, preferably SiC particles.

10. Method according to any of the preceding claims, **characterized in that** the armor molded part (10) is held by a rod (14), in particular a ceramic rod or graphite rod or glass rod, during the brazing.

11. Method according to any of the preceding claims, **characterized in that** the brazing process is monitored and/or controlled and/or regulated by means of a pyrometer (18) and/or a thermal imaging camera (19).

12. Component of a turbomachine, comprising an armoring (8, 9) which is produced according to any of the preceding claims.

## Revendications

1. Procédé d'agencement d'un blindage (8, 9) sur un composant à base de TiAI (1) d'une turbomachine, le blindage étant constitué par un profilé de blindage (10) qui est appliqué par brasage sur le composant à base de TiAI (1), **caractérisé en ce que** l'on utilise comme brasure un alliage à base de nickel dont la composition chimique présente 7,5 à 22,5 % en poids de Cr, 0,5 à 7 % en poids de B, le reste étant constitué de Ni et d'impuretés inévitables,

2. Procédé selon la revendication 1, **caractérisé en ce que** la brasure est réalisée à partir d'un alliage à base de nickel dont la composition chimique présente 10 à 20 % en poids de Cr, en particulier 12,5 à 17,5 % en poids de Cr, de préférence 15 % en poids de Cr, 2 à 5 % en poids de B, en particulier 3 à 4 % en poids de B, de préférence 3,5 % en poids de B, le reste étant constitué de Ni.

3. Procédé selon la revendication 1 ou 2, **caractérisé en ce que** le profilé de blindage (10) est réalisé à partir d'un matériau métallique.

4. Procédé selon l'une des revendications précédentes, **caractérisé en ce que** le profilé de blindage (10) est constitué d'un alliage Co-Cr, en particulier d'un alliage Co-base présentant une proportion de Cr supérieure à 25 % en poids.

5. Procédé selon la revendication 4, **caractérisé en ce que** l'alliage Co-Cr est un alliage Co-base présentant une proportion de Cr supérieure à 25 % en poids, comportant du tungstène dans une proportion de 4 à 20 % en poids, du carbone dans une proportion de 1 à 3 % en poids, du silicium dans une proportion de 0 à 1,5 % en poids, du fer dans une proportion de 0 à 3 % en poids et du nickel dans une proportion de 0 à 3 % en poids.

6. Procédé selon l'une des revendications précédentes, **caractérisé en ce que** la brasure est appliquée sous forme de feuille de brasage (11), en particulier de façon surdimensionnée, sur le profilé de blindage (10), de préférence par soudage par point et/ou par soudage par résistance et/ou par collage.

7. Procédé selon l'une des revendications précédentes, **caractérisé en ce que** le profilé de blindage (10) est réalisé sous la forme d'un parallélépipède ayant deux arêtes diagonalement opposées et arrondies, de sorte qu'une surface présente une courbure convexe ayant un rayon de courbure, le profilé de blindage (10) étant réalisé en coupe longitudinale sous forme de parallélogramme dont les angles opposés sont arrondis, et formant un rectangle en section transversale.

8. Procédé selon l'une des revendications précédentes, **caractérisé en ce que** le composant à base de TiAI (1) est pourvu d'une poche (16) qui complète au moins partiellement le profilé de blindage (10).

9. Procédé selon la revendication 8, **caractérisé en ce que** le composant à base de TiAl (1) au moins dans la zone de la poche et/ou le profilé de blindage est/sont traité(s) en surface, en particulier sablé(s) avec des particules, de préférence des particules de SiC, avant la mise en place du profilé de blindage dans la poche.

10. Procédé selon l'une des revendications précédentes, **caractérisé en ce que**, pendant le brasage, le profilé de blindage (10) est maintenu par une tige (14), en particulier une tige en céramique, en graphite ou en verre.

11. Procédé selon l'une des revendications précédentes, **caractérisé en ce que** le processus de brasage est surveillé et/ou commandé et/ou régulé au moyen d'un pyromètre (18) et/ou d'une caméra thermique (19).

12. Composant d'une turbomachine, comportant un blindage (8, 9) fabriqué selon l'une des revendications précédentes.
